(19) Europäisches Patentamt
European Patent Office
Office européen des brevets

(11) EP 4 502 025 A1

(12) # EUROPEAN PATENT APPLICATION
published in accordance with Art. 153(4) EPC

(43) Date of publication:
**05.02.2025 Bulletin 2025/06**

(21) Application number: **23774478.4**

(22) Date of filing: **06.03.2023**

(51) International Patent Classification (IPC):
***C08J 9/18*** *(2006.01)*

(52) Cooperative Patent Classification (CPC):
**C08J 9/18**

(86) International application number:
**PCT/JP2023/008266**

(87) International publication number:
**WO 2023/181879 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 JP 2022050567**

(71) Applicant: **Kaneka Corporation**
**Osaka-shi, Osaka 530-8288 (JP)**

(72) Inventor: **FUKUZAWA, Jun**
**Settsu-shi, Osaka 566-0072 (JP)**

(74) Representative: **Hoffmann Eitle**
**Patent- und Rechtsanwälte PartmbB**
**Arabellastraße 30**
**81925 München (DE)**

(54) **POLYPROPYLENE FOAM PARTICLES, POLYPROPYLENE FOAM MOLDED BODY, METHOD FOR PRODUCING POLYPROPYLENE FOAM PARTICLES, AND METHOD FOR PRODUCING POLYPROPYLENE FOAM MOLDED BODY**

(57) An object is to provide polypropylene-based expanded particles that can give a polypropylene-based expanded molded product having excellent flame retardancy. The object is attained by polypropylene-based expanded particles obtained by expanding polypropylene-based resin particles, the polypropylene-based resin particles containing: a base resin containing a polypropylene-based resin (a) having a specific MI and a specific melting point and a polypropylene-based resin (b) having a specific MI and a specific melting point; and an intumescent-based flame retardant.

EP 4 502 025 A1

## Description

Technical Field

The present invention relates to polypropylene-based expanded particles, a polypropylene-based expanded molded product, and methods for producing the polypropylene-based expanded particles and the polypropylene-based expanded molded product.

Background Art

Molded products (expanded molded products) obtained by molding polypropylene-based expanded particles have conventionally been widely used as interior materials and shock-absorbing materials of automobiles. Recently, there has been an increase in demand for the application of polypropylene-based expanded molded products to peripheral members for electric components in accordance with a shift toward electric vehicles.

Polypropylene-based expanded molded products used as peripheral members for electric components are required to have higher flame retardancy. There has been proposed a technique for imparting flame retardancy to a polypropylene-based expanded molded product (for example, Patent Literature 1).

Citation List

[Patent Literature]

[Patent Literature 1]
International Publication No. WO2016/052739

Summary of Invention

Technical Problem

Conventional techniques such as that described above have room for further improvement in terms of flame retardancy of the obtained expanded molded product.

In view of the above circumstances, an object of an embodiment of the present invention is to provide polypropylene-based expanded particles that can give a polypropylene-based expanded molded product having excellent flame retardancy.

Solution to Problem

As a result of diligent research in order to attain the object, the inventors of the present invention have completed the present invention.

Specifically, polypropylene-based expanded particles in accordance with an embodiment of the present invention are polypropylene-based expanded particles obtained by expanding polypropylene-based resin particles, the polypropylene-based resin particles containing: a base resin containing a polypropylene-based resin (a) having an MI of 4.00 g/ 10 min to 15.00 g/ 10 min and a melting point of 135°C to 155°C and a polypropylene-based resin (b) having an MI of 0.05 g/10 min to 3.00 g/10 min and a melting point of 135°C to 155°C; and an intumescent-based flame retardant.

A method in accordance with an embodiment of the present invention for producing polypropylene-based expanded particles includes: a dispersion step of dispersing polypropylene-based resin particles, an aqueous dispersion medium, and a blowing agent in a vessel; and a releasing step of releasing, into a region having a pressure lower than an internal pressure of the vessel, a dispersion slurry obtained in the dispersion step, the polypropylene-based resin particles containing a base resin containing a polypropylene-based resin (a) having an MI of 4.00 g/ 10.00 min to 15.00 g/10 min and a melting point of 135°C to 155°C and a polypropylene-based resin (b) having an MI of 0.05 g/10 min to 3.00 g/10 min and a melting point of 135°C to 155°C, and an intumescent-based flame retardant.

Advantageous Effects of Invention

An embodiment of the present invention brings about an effect of being able to provide polypropylene-based expanded particles that can give a polypropylene-based expanded molded product having excellent flame retardancy.

Description of Embodiments

The following description will discuss embodiments of the present invention. The present invention is not, however, limited to the embodiments below. The present invention is not limited to arrangements described below, but may be altered in various ways by a skilled person within the scope of the claims. The present invention also encompasses, in its technical scope, any embodiment or example derived by combining technical means disclosed in respective differing embodiments and Examples. Further, it is possible to form a new technical feature by combining the technical means disclosed in the respective embodiments. All of the academic and patent literatures cited in the present specification are incorporated herein by reference. Any numerical range expressed as "A to B" in the present specification means "not less than A and not more than B (i.e., a range from A to B which includes both A and B)" unless otherwise stated.

In the present specification, a structural unit derived from an X monomer contained in a polymer or a copolymer may be referred to as "X unit".

In the present specification, a copolymer containing, as structural units, an $X^1$ unit, an $X^2$ unit, ... , and an $X^n$ unit (where n is an integer of 2 or more) may be referred to as "$X^1/X^2/.../X^n$ copolymer", unless otherwise stated. The $X^1/X^2/.../X^n$ copolymer is not limited to any particular polymerization form unless otherwise explicitly stated, but may be a random copolymer, an alternating copolymer, a block copolymer, or a graft copolymer.

[1. Polypropylene-based expanded particles]

Polypropylene-based expanded particles in accordance with an embodiment of the present invention are expanded particles obtained by expanding polypropylene-based resin particles, the polypropylene-based resin particles containing: a base resin containing a polypropylene-based resin (a) having an MI of 4.00 g/ 10.00 min to 15.00 g/ 10 min and a melting point of 135°C to 155°C and a polypropylene-based resin (b) having an MI of 0.05 g/ 10 min to 3.00 g/ 10 min and a melting point of 135°C to 155°C; and an intumescent-based flame retardant.

The present expanded particles have the above feature, and therefore bring about the advantage of being able to provide a polypropylene-based expanded molded product having excellent flame retardancy. The expanded particles in accordance with an embodiment of the present invention can also be said to be expanded particles made from polypropylene-based resin particles in accordance with an embodiment of the present invention.

By subjecting the polypropylene-based expanded particles in accordance with an embodiment of the present invention to in-mold expansion molding by a known method, it is possible to provide a polypropylene-based expanded molded product.

In the present specification, the "polypropylene-based resin particles" may be referred to as "the present resin particles", the "polypropylene-based resin particles in accordance with an embodiment of the present invention" may be referred to as "the present resin particles", the "polypropylene-based expanded particles" may be referred to as "expanded particles", the "polypropylene-based expanded particles in accordance with an embodiment of the present invention" may be referred to as "the present expanded particles", and the "polypropylene-based expanded molded product" may be referred to as "expanded molded product".

The following description will discuss possible components of the present resin particles, which components are raw materials of the present expanded particles.

<Base resin>

The present resin particles contain a base resin containing a polypropylene-based resin (a) having an MI of 4.00 g/ 10 min to 15.00 g/ 10 min and a melting point of 135°C to 155°C and a polypropylene-based resin (b) having an MI of 0.05 g/ 10 min to 3.00 g/ 10 min and a melting point of 135°C to 155°C. In the present specification, the "base resin" means a resin component that substantially constitutes the present resin particles.

The base resin contains the polypropylene-based resin (a) in an amount of preferably 20% by weight to 95% by weight, more preferably 30% by weight to 90% by weight, and even more preferably 35% by weight to 75% by weight, with respect to 100% by weight of the base resin. Expanded particles obtained by expanding resin particles containing a base resin having the above configuration bring about the advantage of being able to provide an expanded molded product having excellent surface properties.

The base resin contains the polypropylene-based resin (b) in an amount of preferably 5% by weight to 80% by weight, more preferably 10% by weight to 70% by weight, and even more preferably 25% by weight to 65% by weight, with respect to 100% by weight of the base resin. Expanded particles obtained by expanding resin particles containing a base resin having the above configuration bring about the advantage of being able to provide an expanded molded product having excellent flame retardancy and meeting standards of a UL94V vertical burning test which serve as indices of high flame retardancy.

The present resin particles contain the base resin in an amount of preferably not less than 70.0% by weight, more

preferably not less than 75.0% by weight, and more preferably not less than 77.0% by weight, with respect to 100% by weight as a total amount of the expanded particles. In a case where the expanded particles contain the base resin in an amount of (i) not less than 70.0% by weight, it is possible to obtain an expanded molded product having no sink marks and having excellent strength (e.g., compressive strength). An upper limit of the amount of the base resin contained in the present expanded resin is not particularly limited, and can be, for example, not more than 89.0% by weight, preferably 85.0% by weight, and more preferably not more than 80.0% by weight with respect to 100% by weight as a total amount of the resin particles.

(Polypropylene-based resin)

The base resin contained in the present resin particles contains two types of polypropylene-based resin (the polypropylene-based resin (a) and the polypropylene-based resin (b)). In the description below, a description on a "polypropylene-based resin" is applicable to both the "polypropylene-based resin (a)" and the "polypropylene-based resin (b)" unless otherwise stated.

In the present specification, "polypropylene-based resin" is intended to mean a resin that contains a propylene unit in a proportion of not less than 50 mol% per 100 mol% of all structural units constituting the polypropylene-based resin.

In the present specification, a "structural unit derived from a propylene monomer" may also be referred to as a "propylene unit".

The polypropylene-based resin may be (i) a homopolymer of propylene, (ii) a block copolymer, an alternating copolymer, a random copolymer, or a graft copolymer that is a copolymer of propylene and a monomer other than propylene, or (iii) a mixture of at least two thereof.

Among these, the polypropylene-based resin is preferably a random copolymer of propylene and a monomer other than propylene because the random copolymer has an advantage that resin particles and expanded particles can be processed at a low heating temperature in the expansion step and the step of in-mold expansion molding described later.

In an embodiment of the present invention, in terms of excellent heat resistance, impact absorbency, and chemical resistance of a resultant expanded molded product, it is preferable that the polypropylene-based resin (a) and/or the polypropylene-based resin (b) be each a random copolymer, and it is more preferable that the polypropylene-based resin (a) and the polypropylene-based resin (b) be each a random copolymer.

In addition to the propylene units, the polypropylene-based resin may have one or more units of structural units derived from a monomer(s) other than a propylene monomer or may have one or more types of structural units derived from monomers other than a propylene monomer. A "monomer(s) other than a propylene monomer" used in the production of the polypropylene-based resin may be referred to as a "comonomer(s)". The "structural unit(s) derived from a monomer(s) other than a propylene monomer" contained in the polypropylene-based resin may be referred to as a "comonomer unit(s)".

Examples of such a comonomer(s) include $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene.

Specific examples of the polypropylene-based resin include a polypropylene homopolymer, an ethylene/propylene random copolymer, a 1-butene/propylene random copolymer, a 1-butene/ethylene/propylene random copolymer, an ethylene/propylene block copolymer, a 1-butene/propylene block copolymer, a propylene/chlorinated vinyl copolymer, a propylene/maleic anhydride copolymer, and a styrene-modified polypropylene-based resin.

As a polypropylene-based resin, one of the above specific examples can be used alone or in combination of two or more thereof. Among the above specific examples, an ethylene/propylene random copolymer and a 1-butene/ethylene/propylene random copolymer are suitable in that resultant resin particles have a good expandability and resultant expanded particles have a good moldability.

A case in which an ethylene/propylene random copolymer is used as a polypropylene-based resin (hereinafter "Case A") will be considered. In Case A, an ethylene content in the ethylene/propylene random copolymer is preferably 0.2% by weight to 15.0% by weight, more preferably 0.5% by weight to 10.0% by weight, and even more preferably 0.5% by weight to 4.0% by weight with respect to 100% by weight of the copolymer. The ethylene content can also be described as the amount of structural unit (ethylene unit) derived from ethylene. (i) In a case where the amount of the ethylene unit contained in the ethylene/propylene random copolymer is not less than 0.2% by weight, there tends to be good expandability of resin particles during production of the present expanded particles and/or good moldability of resulting expanded particles. (ii) In a case where the amount of the ethylene unit contained in the ethylene/propylene random copolymer is not more than 15.0% by weight, there is no risk that the mechanical properties of the expanded molded product which result from the present expanded particles deteriorate.

The melting point of the polypropylene-based resin (a) is preferably 135°C to 155°C, more preferably 136°C to 154°C, even more preferably 137°C to 153°C, even more preferably 138°C to 152°C, still even more preferably 139°C to 151°C, and particularly preferably 140°C to 150°C. (i) In a case where the melting point of the polypropylene-based resin is

not less than 135°C, it tends to be easy to obtain an expanded molded product having excellent dimensional stability at a high temperature. (ii) In a case where the melting point of the polypropylene-based resin is not more than 155°C, it is possible to obtain an expanded molded product by in-mold expansion molding at a low steam pressure.

The melting point of the polypropylene-based resin (b) is preferably 135°C to 155°C, more preferably 136°C to 154°C, even more preferably 137°C to 153°C, even more preferably 138°C to 152°C, still even more preferably 139°C to 151°C, and particularly preferably 140°C to 150°C. (i) In a case where the melting point of the polypropylene-based resin (b) is not less than 135°C, it tends to be easy to obtain an expanded molded product having excellent dimensional stability at a high temperature. (ii) In a case where the melting point of the polypropylene-based resin (b) is not more than 155°C, it is possible to obtain, by in-mold expansion molding at a low steam pressure, an expanded molded product having excellent surface properties.

In a case where the present resin particles contains, as the base resin, the polypropylene-based resin (a) and the polypropylene-based resin (b) each having a melting point of 135°C to 155°C, it tends to be easy to obtain an expanded molded product that is even more superior in dimensional stability at a high temperature, and it is possible to obtain an expanded molded product by in-mold expansion molding at an even lower steam pressure.

In the present specification, the melting point of the polypropylene-based resin is a value determined by measurement of a differential scanning calorimetry (hereinafter referred to as "DSC method"). Specific procedures are as follows: (1) the temperature of 5 mg to 6 mg of the polypropylene-based resin is increased from 40.0°C to 220.0°C at a temperature increase rate of 10.0°C/min so that the polypropylene-based resin is melted; (2) thereafter, the temperature of the melted polypropylene-based resin is decreased from 220.0°C to 40.0°C at a temperature decrease rate of 10.0°C/min so that the polypropylene-based resin is crystallized; and (3) then, the temperature of the crystallized polypropylene-based resin is increased from 40.0°C to 220.0°C at a temperature increase rate of 10°C/min. It is possible to determine, as the melting point of the polypropylene-based resin, a temperature at a peak (melting peak) in a DSC curve of the polypropylene-based resin which DSC curve is obtained in the second temperature increase (i.e., in (3)). Note that, in a case where a plurality of peaks (melting peaks) are present in the DSC curve of the polypropylene-based resin obtained during the second temperature increase by the above-described method, a temperature at a peak (melting peak) having the greatest melting heat quantity is defined as the melting point of the polypropylene-based resin. As a differential scanning calorimeter, for example, a differential scanning calorimeter of a DSC6200 type manufactured by Seiko Instruments Inc. can be used.

The melt index (MI) of the polypropylene-based resin (a) at 230°C is 4.00 g/10 min to 15.00 g/10 min, preferably 5.00 g/10 min to 15.00 g/10 min, more preferably 5.50 g/10 min to 12.00 g/10 min, even more preferably 6.00 g/10 min to 10.00 g/10 min, and still even more preferably 6.50 g/10 min to 8.00 g/10 min. MI may be referred to as "melt flow rate (MFR)".

In a case where the MI of the polypropylene-based resin (a) is not less than 4.00 g/10 min, the flowability of the polypropylene-based resin at the time of expansion is good and expansion is easy. In a case where the MI of the polypropylene-based resin (a) is not more than 15.00 g/10 min, the polypropylene-based resin has adequate flowability, and it is therefore possible to obtain expanded particles having a high expansion ratio. In particular, it is preferable that the MI of the polypropylene-based resin (a) be 4.00 g/10 min to 8.00 g/10 min because in that case, it is possible to efficiently produce expanded particles which can suitably provide an expanded molded product having a relatively high density.

The melt index (MI) of the polypropylene-based resin (b) at 230°C is 0.05 g/10 min to 3.00 g/10 min, preferably 0.10 g/10 min to 2.00 g/10 min, more preferably 0.30 g/10 min to 1.00 g/10 min, and even more preferably 0.40 g/10 min to 0.60 g/10 min.

In a case where the MI of the polypropylene-based resin (b) is not less than 0.05 g/10 min, there is an advantage that, when the polypropylene-based resin (b) is kneaded with the polypropylene resin (a) in a granulation step described later, the polypropylene-based resin (b) is less likely to fail to be dispersed, and more uniform mixture can be achieved. In a case where the MI of the polypropylene-based resin (b) is not more than 3.00 g/10 min, it is possible to obtain expanded particles that can give an expanded molded product having excellent flame retardancy. Note that the MI of the polypropylene-based resin can be measured by a method described in Examples.

The weight average molecular weight (Mw) of the polypropylene-based resin (a) is not particularly limited, and is preferably not less than $1\times10^4$ and less than $80\times10^4$, more preferably $5\times10^4$ to $75\times10^4$, and even more preferably $10\times10^4$ to $50\times10^4$.

The weight average molecular weight (Mw) of the polypropylene-based resin (b) is not particularly limited, and is preferably not less than $80\times10^4$, more preferably not less than $100\times10^4$, and even more preferably not less than $110\times10^4$. With use of a resin having a relatively large Mw of not less than $100\times10^4$ as the polypropylene-based resin (b), it is possible to provide an expanded molded product having excellent flame retardancy and meeting high flame retardancy standards (UL94V), even in a case where the expanded molded product has a relatively light weight (low density) or a relatively small thickness (sample thickness). An upper limit of the Mw of the polypropylene-based resin (b) is not particularly limited, and can be, for example, not more than $200\times10^4$.

In the present specification, the Mw of the polypropylene-based resin is a value measured in terms of polystyrene

by gel permeation chromatography (GPC). An example of measurement conditions of GPC in measurement of the Mw of the polypropylene-based resin is shown below.

(Measurement conditions)

Pretreatment of sample: 30 mg of a sample (polypropylene-based resin) is completely dissolved in 20 mL of o-dichlorobenzene having a temperature of 145°C, and then a resultant solution is filtered through a sintered filter having a pore size of 1.0 μm. A filtrate thus obtained is used as an analysis sample.
Measuring device: a gel permeation chromatograph Alliance GPC 2000 type (manufactured by Waters Corporation)
Analysis device: data processing software Empower professional (manufactured by Waters Corporation) Column: two columns of TSKgel GMH6-HT and two columns of TSKgel GMH6-HTL (manufactured by Tosoh Corporation; each column has a size of an internal diameter of 7.5 mm × a length of 300 mm) Mobile phase: o-dichlorobenzene (containing 0.025% BHT)
Column temperature: 140°C
Detector: differential refractometer
Flow rate: 1.0 mL/min

A molecular structure of each of the polypropylene-based resin (a) and the polypropylene-based resin (b) is not particularly limited, and can be a linear structure or a branched structure. In particular, in terms of obtaining a molded product having excellent surface properties with less inter-particle dimples on the surface of the molded product, it is preferable that the polypropylene-based resin (b) have a linear structure, and it is more preferable that both the polypropylene-based resin (a) and the polypropylene-based resin (b) have a linear structure.
The polypropylene-based resin can be obtained by a known method. A polymerization catalyst to be used in synthesizing the polypropylene-based resin is not limited to any particular one. Possible examples of the polymerization catalyst include a Ziegler catalyst and a metallocene catalyst.

<Intumescent-based flame retardant>

The present resin particles contain an intumescent-based flame retardant. In the present specification, the intumescent-based flame retardant is intended to mean a substance that contains phosphorus and nitrogen among the constituents and that is capable of imparting flame retardancy to an object (e.g., an expanded molded product) containing the intumescent-based flame retardant. When an expanded molded product containing the intumescent-based flame retardant is burned, the burning heats the expanded molded product and causes an expansion layer made of a foam-like film to be formed on the surface of the expanded molded product. This (i) suppresses transmission of heat from a burning portion on the surface of the expanded molded product to an inside of the expanded molded product (heat insulation) and prevents thermal decomposition of the resin and (ii) blocks supply of oxygen into the expansion layer and suppresses oxidization reaction to thereby allow the expanded molded product to exhibit excellent flame retardancy. It can also be said that an intumescent-based flame retardant is a substance that has an effect of causing such an expansion layer made of a foam-like film to be formed when an expanded molded product containing the intumescent-based flame retardant is burned.
The present resin particles contain the intumescent-based flame retardant in an amount of preferably more than 4.0% by weight and not more than 30.0% by weight, more preferably 6.0% by weight to 25.0% by weight, even more preferably 11.0% by weight to 23.0% by weight, and still even more preferably 15.0% by weight to 21.0% by weight with respect to 100% by weight of the resin particles. (i) In a case where the resin particles contain the intumescent-based flame retardant in an amount of more than 4.0% by weight, it is possible to provide an expanded molded product having excellent flame retardancy. (ii) In a case where the resin particles contain the intumescent-based flame retardant in an amount of not more than 30.0% by weight, it is possible to provide an expanded molded product having no sink marks and having excellent strength (e.g., compressive strength). Note that in a case where a plurality of compounds are used in combination as the intumescent-based flame retardant, an amount of the intumescent-based flame retardant contained in the present resin particles is a total amount of the plurality of compounds.
An intumescent-based flame retardant in accordance with an embodiment of the present invention (may hereinafter be referred to as "the present intumescent-based flame retardant") can be (i) a compound containing, in its molecule, both a phosphorus atom and a nitrogen atom, (ii) a combination of a compound containing a phosphorus atom in its molecule and a compound containing a nitrogen atom in its molecule, or (iii) a combination of two or more thereof. Among these, the present intumescent-based flame retardant is preferably a combination of a compound containing a phosphorus atom in its molecule and a compound containing a nitrogen atom in its molecule because such an

intumescent-based flame retardant has an advantage that the intumescent-based flame retardant (i) is less likely to undergo thermal denaturation during expansion of the resin particles and during molding of the expanded particles, (ii) has good dispersibility in the base resin, and (iii) makes it easy for the formed expansion layer to exhibit a flame retardant effect.

Examples of the compound that can be contained in the present resin particles as the intumescent-based flame retardant and that contains both a phosphorus atom and a nitrogen atom in its molecule include: a phosphate such as ammonium polyphosphate, melamine polyphosphate, melamine phosphate, and a phosphoric acid ester amide; and a pyrophosphate such as piperazine pyrophosphate and melamine pyrophosphate. One of these compounds may be used alone, or two or more of these compounds may be used in combination.

In a case where the present intumescent-based flame retardant is a combination of a compound containing a phosphorus atom in its molecule and a compound containing a nitrogen atom in its molecule, examples of the compound containing a phosphorus atom include an organic phosphorus-based compound and red phosphorus. Further, examples of the compound containing a nitrogen atom in its molecule include a hindered amine, melamine, ammonium borate, and ammonium carbonate. Among these, the compound containing a phosphorus atom is preferably an organic phosphorus-based compound, and the compound containing a nitrogen atom in its molecule is preferably a hindered amine, because it is possible to bring about the advantage of being able to provide expanded particles that can give an expanded molded product having excellent surface appearance and productivity in addition to excellent flame retardancy. That is, the present resin particles preferably contain an organic phosphorus-based compound and a hindered amine as the intumescent-based flame retardant, and more preferably contains only an organic phosphorus-based compound and a hindered amine as the intumescent-based flame retardant. Note that a compound containing not only a phosphorus atom but also a nitrogen atom is not regarded as the "compound containing a phosphorus atom" in the present specification, and a compound containing not only a nitrogen atom but also a phosphorus atom is not regarded as the "compound containing a nitrogen atom" in the present specification.

(Organic phosphorus-based compound)

Examples of the organic phosphorus-based compound include a phosphonate, an organic phosphite ester, an organic phosphinite, a metal salt of a phosphinic acid, a metal salt of a diphosphinic acid, a phosphinate, and a polyol phosphate alcohol.

Among the above organic phosphorus-based compounds, a phosphonate is preferable for being able to provide an expanded molded product that is superior in non-ignition property and superior self-extinguishing property.

(Phosphonate)

A phosphonate is intended to mean: an ester and a partial ester containing a $M-PO(OH)_2$ group and/or a $M-PO(OM^1)_2$ group (where M is a monovalent hydrocarbon group (e.g., a methyl group, a benzyl group, an aryl group, an alkynyl group, an allenyl group, a vinyl group or a substituted vinyl group), and $M^1$ is a hydrocarbyl group (e.g., an alkyl group or an aryl group)); and a salt thereof.

Examples of the phosphonate include: an alkyl phosphonic acid, an aryl phosphonic acid, and an ester thereof; a mono-phosphonate; an acyclic bisphosphonate; and a cyclic phosphonate.

Among these phosphonates, a cyclic phosphonate is preferable, and a cyclic bisphosphonate is particularly preferable.

Examples of the cyclic phosphonate include a compound represented by the following structural formula (i):

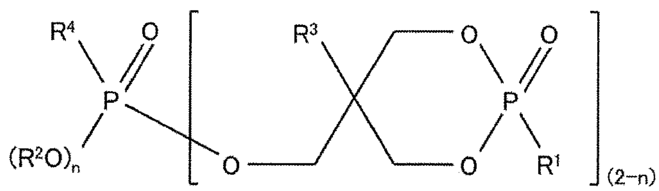

・・・(i)

where $R^1$ and $R^2$ are independently a $C_{1-4}$ alkyl group, $R^3$ is H or a $C_{1-4}$ alkyl group, $R^4$ is a $C_{9-22}$ alkyl group, a $C_{9-22}$ cycloalkyl group, a $C_{9-22}$ aryl group, or a $C_{9-22}$ aralkyl group, and n is 0 or 1.

The cyclic phosphonate represented by the structural formula (i) above is disclosed in more detail in the specification of French Patent Application Publication No. 1503429.

As the cyclic phosphonate, a cyclic bisphosphonate, which is a compound represented by the following structural formula (ii), such as pentaerythrityl diphosphonate, can also be suitably used:

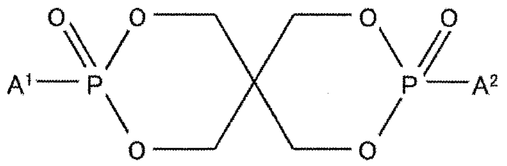

・・・(ii)

where $A^1$ and $A^2$ are independently a $C_{1-10}$ alkyl group, a $C_{2-10}$ alkenyl group, a benzyl group, a phenylethyl group, a phenyl group, or a naphthyl group.

The cyclic bisphosphonate is disclosed in more detail in Specification of US Patent No. 4174343 and Specification of UK Patent Application Publication No. 1515223.

Among cyclic bisphosphonates, pentaerythrityl diphosphonate (e.g., AFLAMMIT (registered trademark) PCO 900 (phosphorus content: 24%) manufactured by Thor GmbH), which is represented by the following structural formula (iii), is particularly preferable because the pentaerythrityl diphosphonate makes it possible to obtain an expanded molded product having excellent dimensional stability under heating. The pentaerythrityl diphosphonate is, specifically, particularly preferably 3,9-dimethyl-2,4,8, 10-tetraoxa-3,9-diphosphaspiro[5,5]undecane-3,9-dioxide.

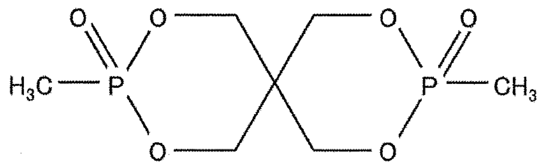

・・・(iii)

As another cyclic phosphoric ester, the compound disclosed in the specification of French Patent Application Publication No. 1503429 can be used.

As the organic phosphorus-based compound, it is possible to use an organic phosphorus-based compound that has been subjected to, on its surface, a coating treatment (coating) (e.g., a phosphonate whose surface has been coated, or the like).

(Hindered amine)

In the present specification, "hindered amine" is intended to mean a hindered amine that has an OR group directly substituted on an N atom (where R is a saturated or unsaturated monovalent hydrocarbon group) (hereinafter such a hindered amine may also be referred to as an N-substituted hindered amine). The hindered amine is not limited to any particular one, provided that the hindered amine has an OR group directly substituted on an N atom. A known hindered amine can be used as the hindered amine. As the hindered amine, one type of hindered amine can be used alone or two or more types of hindered amine can be used in combination.

In the present specification, a hindered amine that has no OR group directly substituted on an N atom is not regarded as a hindered amine.

The hindered amine is preferably an N-substituted hindered amine that contains a triazine component (hereinafter such an N-substituted hindered amine may also be referred to as "triazine skeleton-containing hindered amine") because the triazine skeleton-containing hindered amine is capable of exhibiting a flame retardant effect over a wide temperature range. The triazine skeleton-containing hindered amine is not limited to any particular one, and is preferably (i) a compound of CAS No. 191680-81-6 ((i-1) which is a reaction product of N,N'-bis(3-aminopropyl)ethylenediamine and a product obtained by causing cyclohexane to react with a reaction product of peroxidized N-butyl-2,2,6,6,-tetramethyl-4-piperidinamine and 2,4,6-trichloro-1,3,5-triazine, (i-2) which can also be said to be a reaction product of 2,4-bis((1-cyclohexyloxy-2,2,6,6-tetramethylpiperidin-4-yl)butylamino)-6-chloro-S-triazine and N,N'-bis(3-aminopropyl)ethylenediamine, (i-3) which can also be said to be N,N',N'''-tris{2,4-bis[(1-hydrocarbyloxy-2,2,6,6-tetramethylpiperidin-4-yl) alkylamino]-s-triazin-6-yl}-3,3'-ethylenediiminodipropylamine) and/or (ii) bis(1-undecanoxy-2,2,6,6-tetramethylpiperidin-4-yl)carbonate. It is also possible to use an isomer of the triazine skeleton-containing hindered amine described above and a crosslinked derivative of the triazine skeleton-containing hindered amine described above. The triazine skeleton-containing hindered amine is disclosed in more detail in page 2, line 32 to page 4, line 6 of the specification of European Patent No. 0889085.

A commercially available product can be suitably used as the triazine skeleton-containing hindered amine. Examples of the commercially available product of the triazine skeleton-containing hindered amine include NOR116 (compound of CAS No. 191680-81-6) of FLAMSTAB (registered trademark) manufactured by BASF, NOW XP of HOSTAVIN (registered trademark) manufactured by CLARIANT, and ADK STAB LA-81 (bis(1-undecanoxy-2,2,6,6-tetramethylpiperidin-4-yl)carbonate) manufactured by ADEKA Corporation.

(Amounts of organic phosphorus-based compound and hindered amine contained)

In a case where the present resin particles contain an organic phosphorus-based compound and a hindered amine as the intumescent-based flame retardant, the present resin particles contain the organic phosphorus-based compound in an amount of 3.0% by weight to 20.0% by weight, preferably 5.0% by weight to 19.0% by weight, more preferably 7.0% by weight to 18.0% by weight, even more preferably 10.0% by weight to 17.0% by weight, and still even more preferably 13.0% by weight to 16.0% by weight with respect to 100% by weight as a total amount of the resin particles. (i) In a case where the resin particles contain the organic phosphorus-based compound in an amount of not less than 3.0% by weight, it is possible to stably provide an expanded molded product having excellent flame retardancy. (ii) In a case where the resin particles contain the organic phosphorus-based compound in an amount of not more than 20.0% by weight, it is possible to provide an expanded molded product having no sink marks and having excellent strength (e.g., compressive strength).

Further, the present resin particles contain the hindered amine in an amount of preferably 1.0% by weight to 10.0% by weight, more preferably 2.0% by weight to 8.0% by weight, even more preferably 2.5% by weight to 7.0% by weight, and still even more preferably 3.0% by weight to 6.0% by weight, with respect to 100% by weight as a total amount of the resin particles. (i) In a case where the present resin particles contain the hindered amine in an amount of more than 1.0% by weight, it is possible to obtain an expanded molded product which is excellent in non-ignition property and self-extinguishing property. (ii) In a case where the present expanded particles contain the hindered amine in an amount of not more than 10.0% by weight, it is possible to suppress the agglomeration (blocking) of the resin particles during the expansion step described later.

Because of the above advantages, the present resin particles preferably contain 3.0% by weight to 20.0% by weight of the organic phosphorus-based compound and 1.0% by weight to 10.0% by weight of the hindered amine with respect to 100% by weight as a total amount of the resin particles.

<Other additives>

The present resin particles can contain, apart from the base resin and the intumescent-based flame retardant, any other additive(s) provided that the effects of the present invention are not compromised. Examples of such other additive(s) include other flame retardants (other than the intumescent-based flame retardant), UV-ray inhibitors (e.g., Tinuvin622 manufactured by BASF), peroxide scavengers, nucleating agents, antistatic agents, antioxidants (e.g., Irgafos168, Irganox1010, etc. manufactured by BASF), photo stabilizers, electrically conductive agents, lubricants, fillers, carbon black, and powdered activated carbon.

Examples of the other flame retardant(s) include: bromine-based flame retardants such as a brominated bisphenol A flame retardant, a brominated bisphenol S flame retardant, a brominated butadiene-styrene block copolymer flame retardant, and a brominated polyphenylene ether flame retardant; and melamine-based flame retardants such as melamine sulfate, melamine polyphosphate, melamine cyanurate, melamine pyrophosphate, and a melamine hydrobromide. One type of these other flame retardants can be used alone or in combination of two or more thereof.

An amount of the other flame retardant(s) contained in the present resin particles is, for example, preferably more than 0% by weight to 1.00% by weight, more preferably 0.05% by weight to 0.75% by weight, and even more preferably 0.10% by weight to 0.50% by weight, with respect to 100% by weight as a total amount of the polypropylene-based resin particles. Note that since the present resin particles contain the intumescent-based flame retardant as an essential component, it is possible for the present resin particles to provide, without containing the other flame retardant(s), expanded particles that can give an expanded molded product having excellent flame retardancy. In other words, the amount of the other flame retardant(s) contained in the present resin particles can be 0% by weight.

(Melting point of resin particles)

The melting point of the resin particles is not particularly limited, and is, for example, preferably 122.0°C to 159.0°C.

<Physical properties of polypropylene-based expanded particles>

(Average cell diameter)

An average cell diameter of the present expanded particles is not particularly limited, and is preferably 100 μm to 600 μm, more preferably 150 μm to not more than 450 μm, and even more preferably 200 μm to not more than 400 μm. (i) In a case where the average cell diameter of the present expanded particles is not less than 100 μm, it is possible to obtain an expanded molded product having excellent surface appearance. (ii) In a case where the average cell diameter of the

present expanded particles is not more than 600 μm, good secondary expansion properties can be achieved during in-mold expansion molding of the expanded particles, so that it is possible to obtain an expanded molded product having excellent surface appearance. It can also be said that the average cell diameter of the expanded particles is the average diameter of the cells of the expanded particles. Note that in the present specification, the average cell diameter of the expanded particles can be measured by a method described in Examples.

(High temperature-side melting heat quantity of expanded particles)

A high temperature-side melting heat quantity of the present expanded particles is preferably 5.0 J/g to 25.0 J/g, more preferably 8.0 J/g to 20.0 J/g, and even more preferably 10.0 J/g to 15.0 J/g. (i) In a case where the high temperature-side melting heat quantity of the expanded particles is not less than 5.0 J/g, it is possible to suppress occurrence of sink marks in the surfaces of a resulting expanded molded product during in-mold expansion molding of the expanded molded product and suppress dimensional shrinkage. (ii) In a case where the high temperature-side melting heat quantity of the expanded particles is not more than 25.0 J/g, it is possible to obtain an expanded molded product which has excellent internal fusibility and a smooth surface. It can also be said that the high temperature-side melting heat quantity is a high temperature-side melting peak heat quantity. Note that in the present specification, the high temperature-side melting heat quantity of the expanded particles can be measured by a method described in Examples.

Further, it is preferable that the present expanded particles have at least two melting peaks in a DSC curve obtained by measurement by differential scanning calorimetry, because in such a case, the present expanded particles can give an expanded molded product that is free of sink marks caused by shrinkage and of surface unevenness and thus has excellent surface properties. That is, it is preferable that the present expanded particles have at least two melting peaks in a DSC curve obtained by measurement by differential scanning calorimetry and have a high temperature-side melting heat quantity of 5.0 J/g to 25.0 J/g.

(Density of expanded particles)

A bulk density of the present expanded particles (expanded particle bulk density) is not particularly limited, and is preferably 15 g/L to 400 g/L, more preferably 60 g/L to 300 g/L, even more preferably 70 g/L to 250 g/L, still even more preferably 80g/L to 250g/L, and particularly preferably 90 g/L to 250 g/L. (i) In a case where the bulk density of the present expanded particles is not less than 15 g/L, it is possible to bring about an advantage that an internal pressure necessary for molding the expanded particles is decreased. (ii) In a case where the bulk density of the present expanded particles is not more than 400 g/L, it is possible to bring about the advantage of being able to obtain an expanded molded product that is excellent in light weight property. Note that in the present specification, the bulk density of the expanded particles can be measured by a method described in Examples.

Note that, in a case where the present expanded particles are impregnated with air (an internal pressure is imparted) at the time of molding of the present expanded particles, the density of the expanded particles is intended to mean the bulk density of the expanded particles before the impregnation with air (before imparting an internal pressure).

[2. Method for producing expanded particles]

A method in accordance with an embodiment of the present invention for producing expanded particles is preferably a method that includes: a dispersion step of dispersing polypropylene-based resin particles, an aqueous dispersion medium, and a blowing agent in a vessel; and a releasing step of releasing, into a region having a pressure lower than an internal pressure of the vessel, a dispersion slurry obtained in the dispersion step, the polypropylene-based resin particles containing a base resin containing a polypropylene-based resin (a) having an MI of 4.00 g/10.00 min to 15.00 g/10 min and a melting point of 135°C to 155°C and a polypropylene-based resin (b) having an MI of 0.05 g/ 10 min to 3.00 g/10 min and a melting point of 135°C to 155°C, and an intumescent-based flame retardant.

In the present specification, the "method in accordance with an embodiment of the present invention for producing expanded particles" may be referred to as "the present production method".

For the resin particles used in the present production method, the above description in the [1. Polypropylene-based expanded particles] section can be cited as appropriate.

(Granulation step)

The present production method preferably includes a granulation step of preparing resin particles before the expansion step.

The granulation step in the present production method is not particularly limited, provided that the granulation step makes it possible to obtain resin particles. A known method can be employed as the granulation step. Examples of the

granulation step include a method of sequentially carrying out the following processes (S1) through (S3): (S1) the polypropylene-based resin (a), the polypropylene-based resin (b), and the intumescent-based flame retardant in predetermined amounts and, as needed, the other additive(s) are kneaded with use of an extruder to prepare a melted and kneaded product; (S2) the melted and kneaded product is extruded from a die included in the extruder; and (S3) the melted and kneaded material thus extruded is chopped into an intended shape (e.g., a cylindrical shape, a spherical shape, etc.) to obtain resin particles.

In the process (S1), the polypropylene-based resin (a), the polypropylene-based resin (b), and the intumescent-based flame retardant in predetermined amounts and, as needed, the other additive(s) may be blended in advance to prepare a blended product. The blended product may be subjected to the extruder and melted and kneaded to prepare a melted and kneaded product.

In the step (S3), before the chopping of the melted and kneaded product, the melted and kneaded product which has been extruded can be cooled and solidified with use of a cooling medium such as water.

(Dispersion step)

It can be said that the dispersion step is a step of preparing a dispersion slurry in which the present resin particles and a blowing agent and, as necessary, a dispersion agent and/or a dispersion auxiliary agent are dispersed in an aqueous dispersion medium.

The vessel used in the dispersion step is not limited to any particular one, and is preferably a vessel which can withstand the expansion temperature and the expansion pressure described later. The vessel is, for example, preferably a pressure-resistant vessel and more preferably an autoclave-type pressure-resistant vessel. The vessel can also be provided with a stirrer therein.

The aqueous dispersion medium is not limited to any particular one, provided that the aqueous dispersion medium allows the resin particles, the blowing agent, and the like to be uniformly dispersed.

Examples of the aqueous dispersion medium include (a) a dispersion medium obtained by adding methanol, ethanol, ethylene glycol, glycerin or the like to water, (b) water such as tap water and industrial water, and (c) a solution (aqueous solution) containing a salt such as sodium chloride or sodium sulfate.

Examples of the blowing agent include (a) inorganic blowing agents such as (a-1) inorganic gas such as nitrogen, carbon dioxide, air (mixture of oxygen, nitrogen, and carbon dioxide) and (a-2) water and (b) organic blowing agents such as (b-1) saturated hydrocarbon having 3 to 5 carbon atoms such as propane, normal butane, isobutane, normal pentane, isopentane, and neopentane, (b-2) ethers such as dimethyl ether, diethyl ether, and methyl ethyl ether, and (b-3) halogenated hydrocarbons such as monochloromethane, chloroethane, and hydrofluoroolefin.

In terms of low load on the environment and excellent cost effectiveness and safety, it is preferable that the blowing agent be water and/or carbon dioxide.

In the present production method for producing expanded particles, it is preferable to use a dispersion agent (e.g., an inorganic substance such as tricalcium phosphate and kaolin) and a dispersion auxiliary agent (e.g., an anionic surfactant such as sodium dodecylbenzene sulfonate). This configuration makes it possible to reduce agglomeration (which may hereinafter be referred to as blocking) of resin particles, and to increase the stability of the dispersion slurry in the vessel. As a result, the configuration has the advantage of making it possible to stably produce expanded particles.

As each of the aqueous dispersion medium and the blowing agent, one of the above examples may be used alone, or two or more of the above examples may be used in combination.

(Temperature-increasing and pressure-increasing step and maintaining step)

It is preferable that the present production method further include, after the dispersion step and before the releasing step: (i) a temperature-increasing and pressure-increasing step of increasing an internal temperature of the vessel to a certain temperature and increasing an internal pressure of the vessel to a certain pressure and (ii) a maintaining step of maintaining the internal temperature and the internal pressure of the vessel at the certain temperature and the certain pressure. The maintaining step is preferably carried out after the temperature-increasing and pressure-increasing step. In the present specification, (a) the certain temperature in the temperature-increasing and pressure-increasing step and the maintaining step may be referred to as an expansion temperature and (b) the certain pressure in the temperature-increasing and pressure-increasing step and the maintaining step may be referred to as an expansion pressure.

The expansion temperature cannot be specified definitely because the expansion temperature varies depending on, for example, types of the base resin and the intumescent-based flame retardant which are contained in the resin particles, and a type of the blowing agent, (i) The expansion temperature is preferably in a range of 20.0°C below to 20.0°C above the melting point of (a) a mixture of the base resin and the intumescent-based flame retardant, (b) the polypropylene-based resin composition, or (c) the resin particles. (ii) The expansion temperature is more preferably in a range of 10.0°C below to 15.0°C above the melting point of (a) the mixture of the base resin and the intumescent-based flame

retardant, (b) the polypropylene-based resin composition, or (c) the resin particles. (iii) The expansion temperature is even more preferably in a range of 5.0°C below to 13.0°C above the melting point of (a) the mixture of the base resin and the intumescent-based flame retardant, (b) the polypropylene-based resin composition, or (c) the resin particles.

The expansion pressure is preferably 0.5 MPa (gage pressure) to 10.0 MPa (gage pressure), more preferably 0.6 MPa (gage pressure) to 5.0 MPa (gage pressure), and even more preferably 0.6 MPa (gage pressure) to 2.5 MPa (gage pressure). With an expansion pressure of not less than 0.5 MPa (gage pressure), it is possible to obtain expanded particles having suitable density.

In the maintaining step, a period of time (maintaining time) for which the dispersion slurry in the vessel is maintained at around the expansion temperature and the expansion pressure is not particularly limited. The maintaining time is preferably 10 minutes to 60 minutes, more preferably 12 minutes to 50 minutes, and even more preferably 15 minutes to 40 minutes.

(Releasing step)

The releasing step makes it possible to expand the resin particles, and as a result, expanded particles are obtained. It can also be said that the releasing step is a step of releasing one end of the vessel so as to release the dispersion slurry inside the vessel into a region (space) having a pressure lower than the expansion pressure (i.e., the internal pressure of the vessel).

In the releasing step, a "region having a pressure lower than the expansion pressure" is intended to mean a "region under a pressure lower than the expansion pressure" or a "space under a pressure lower than the expansion pressure", and can also be described as "in an atmosphere having a pressure lower than the expansion pressure". The region having a pressure lower than the expansion pressure is not particularly limited, provided that the pressure is lower than the expansion pressure. The region having a pressure lower than the expansion pressure can be, for example, a region under atmospheric pressure.

(Expansion step)

The steps from the dispersion step to the releasing step can be referred to as an expansion step. In addition, a process of producing expanded particles from resin particles in this manner will be referred to as a "first-step expansion process," and the expanded particles thus obtained will be referred to as "first-step expanded particles".

(Second-step expansion process)

In order to obtain expanded particles having a high expansion ratio, the first-step expanded particles obtained in the first-step expansion process may be expanded again. A step of increasing the expansion ratio of first-step expanded particles is referred to here as a "second-step expansion process", and the polypropylene-based expanded particles obtained through the second-step expansion process are referred to as "second-step expanded particles". A specific method of the second-step expansion process is not particularly limited, and a known method can be employed.

[3. Polypropylene-based expanded molded product]

A polypropylene-based expanded molded product in accordance with an embodiment of the present invention is an expanded molded product obtained by molding (e.g., in-mold expansion molding) of the present expanded particles. In the present specification, the "polypropylene-based expanded molded product in accordance with an embodiment of the present invention" may be referred to as "the present expanded molded product". It can also be said that the present expanded molded product is an expanded molded product obtained by molding polypropylene-based expanded particles obtained by expanding polypropylene-based resin particles, the polypropylene-based resin particles containing: a base resin containing a polypropylene-based resin (a) having an MI of 4.00 g/10 min to 15.00 g/10 min and a melting point of 135°C to 155°C and a polypropylene-based resin (b) having an MI of 0.05 g/10 min to 3.00 g/10 min and a melting point of 135°C to 155°C; and an intumescent-based flame retardant.

The present expanded molded product has the above configuration and therefore has excellent flame retardancy.

(Flame retardancy of expanded molded product)

In the present specification, the flame retardancy of the expanded molded product can be evaluated by a UL94V "vertical burning expanded material test" (UL94V test). A test method and evaluation criteria for the UL94V "vertical burning expanded material test" will be described in Examples.

The present expanded molded product preferably meets at least the standard V-2, more preferably meets the standard V-1, and particularly preferably meets the standard V-0 in the UL94V test. It can be said that an expanded molded product that meets the standard V-2 is excellent in flame retardancy in comparison with an expanded molded product that fails to meet the standard V-2. It can be said that an expanded molded product that meets the standard V-1 is even more excellent in flame retardancy in comparison with an expanded molded product that meets only the standard V-2. It can be said that an expanded molded product that meets the standard V-0 is particularly excellent in flame retardancy in comparison with an expanded molded product that meets only V-2 and/or V-1 or fails to meet V-2 and V-1.

The expanded molded product which meets the standard V-0 in the UL94V test (i) does not have a sample that continues to burn for not less than 10 seconds during any contact burning and (ii) does not cause, with particles of a test sample that fall during any burning, absorbent cotton placed below the test sample to combust. That is, it can be said that such an expanded molded product not only is further prevented from burning but also has a self-extinguishing property so excellent that even if flammable particles are generated (melt and drip) during burning, the flames of the particles are extinguished before the particles reach the absorbent cotton (flammable material).

In the UL94V test, a thickness of the test sample is one of factors affecting evaluation results. Among test samples obtained from the same expanded molded product, a test sample having a smaller thickness tends to be more lowly evaluated in terms of flame retardancy, due to reasons such as an increase in ratio of a surface area to a volume of the test sample, i.e., an increase in ratio of a burning area at the time of burning. In other words, an expanded molded product that meets a criteria of excellent flame retardancy even under a condition where the thickness of the test sample is small (e.g., 8 mm or 5 mm) can be said to be an expanded molded product that is even more excellent in flame retardancy. Therefore, from the viewpoint of providing an expanded molded product that is even more excellent in flame retardancy, in the UL94V test, the present expanded molded product preferably meets the standard V-0 in cases where the thickness of the test sample is 13 mm and 8 mm, respectively, and meets the standard V-2 in a case where the thickness of the test sample is 5 mm, more preferably meets the standard V-0 in cases where the thickness of the test sample is 13 mm and 8 mm and meets the standard V-1 in a case where the thickness of the test sample is 5 mm, and particularly preferably meets the standard V-0 in all cases where the thickness of the test sample is 13 mm, 8 mm, and 5 mm, respectively.

(Remaining weight ratio of expanded molded product)

In the present specification, the flame retardancy of the expanded molded product can be evaluated also by a remaining weight ratio of the expanded molded product after the UL94V test. In the present specification, the remaining weight ratio of the expanded molded product is a value that can be obtained by measuring, with respect to a test sample after the UL94V test (after the second burning), a weight of the test sample (weight after the burning) and calculating a remaining weight ratio of the expanded molded product in accordance with the following expression: Remaining weight ratio (%) of the expanded molded product = {weight of the test sample after the burning (after the UL94V test) / weight of the test sample before the burning (before the UL94V test) $\times$ 100.

It can be said that the higher the remaining weight ratio of an expanded molded product is, the more excellent in flame retardancy the expanded molded product is. Note that a remaining weight ratio of an expanded molded product is affected by a thickness of a test sample, similarly as in evaluation in the UL94V test. Among test samples obtained from the same expanded molded product, a test sample having a smaller thickness tends to have a lower remaining weight ratio.

As such, in terms of providing an expanded molded product even more excellent in flame retardancy, the remaining weight ratio in the present expanded molded product is (i) preferably not less than 70%, more preferably not less than 80%, even more preferably not less than 85%, still even more preferably not less than 90%, and particularly preferably not less than 95% in a case where the test sample has a thickness of 13 mm, (ii) preferably not less than 50%, more preferably not less than 60%, even more preferably not less than 70%, still even more preferably not less than 75%, and particularly preferably not less than 80% in a case where the test sample has a thickness of 8 mm, and (iii) preferably not less than 40%, more preferably not less than 50%, even more preferably not less than 60%, still even more preferably not less than 70%, and particularly preferably not less than 75% in a case where the test sample has a thickness of 5 mm.

Regarding the flame retardancy of the expanded molded product, a density of the expanded molded product is also one of the factors affecting test results of the UL94V test and results of measurement of a remaining weight ratio. The lower the density of the expanded molded product, the smaller the amounts of the components (the base resin and the flame retardant) contained in the expanded molded product and derived from the expanded particles, and it is more difficult to enjoy the flame retardancy improving effect provided by the use of the base resin composition and the flame retardant. For such reasons, the expanded molded product tends to be more lowly evaluated in flame retardancy. Therefore, it is not possible to simply compare test results of the UL94V test and results of measurement of a remaining weight ratio between expanded molded products having largely differing densities. Therefore, the "excellent flame retardancy" of the present expanded molded product is intended to mean to have superior flame retardancy, as compared with an expanded molded product having an equivalent density (i.e., an expanded molded product that does not satisfy an embodiment of the present invention).

(Density of expanded molded product)

A density of the present expanded molded product is preferably 15 g/L to 400 g/L, preferably 50 g/L to 300 g/L, and preferably 98 g/L to 200 g/L. A density of not less than 15 g/L of an expanded molded product has the advantage that it is possible to obtain an expanded molded product that has a smooth surface with no sink marks therein and is superior in surface appearance. A density of not more than 400 g/L makes it possible to obtain an expanded molded product that is sufficiently reduced in weight. Further, it is particularly preferable that the expanded molded product have a density of not less than 98 g/L, because in such a case, it is possible to provide the expanded molded product that is even more excellent in flame retardancy and is capable of meeting the V-0 standard even in a case where the thickness of the test sample is 5 mm in the UL94V test. Note that in the present specification, the density of the expanded molded product can be measured by a method described in Examples.

<Method for producing expanded molded product>

A method for producing the present expanded molded product is not particularly limited in terms of other aspects, provided that the method makes it possible to mold the present expanded particles (preferably by in-mold expansion molding) to obtain an expanded molded product. A known method can be applied as the method for producing the present expanded molded product. As the method for producing the present expanded molded product, for example, a production method described in the <Method for producing expanded molded product> section of International Publication No. WO 2022/149538 can be suitably employed.

An embodiment of the present invention may include features below.

<1> Polypropylene-based expanded particles obtained by expanding polypropylene-based resin particles, the polypropylene-based resin particles containing: a base resin containing a polypropylene-based resin (a) having an MI of 4.00 g/10 min to 15.00 g/ 10 min and a melting point of 135°C to 155°C and a polypropylene-based resin (b) having an MI of 0.05 g/10 min to 3.00 g/10 min and a melting point of 135°C to 155°C; and an intumescent-based flame retardant.

<2> The polypropylene-based expanded particles described in <1>, wherein the polypropylene-based resin (a) and the polypropylene-based resin (b) are each a random polypropylene-based resin.

<3> The polypropylene-based expanded particles described in <1> or <2>, wherein an amount of the polypropylene-based resin (b) contained is 5% by weight to 80% by weight with respect to 100% by weight of the base resin.

<4> The polypropylene-based expanded particles described in any one of <1> through <3>, wherein an organic phosphorus-based compound and a hindered amine are contained as the intumescent-based flame retardant.

<5> The polypropylene-based expanded particles described in <4>, wherein the polypropylene-based resin particles contain, with respect to 100% by weight of the polypropylene-based resin particles, the organic phosphorus-based compound in an amount of 3.0% by weight to 20.0% by weight and the hindered amine in an amount of 1.0% by weight to 10.0% by weight.

<6> The polypropylene-based expanded particles described in <4> or <5>, wherein the organic phosphorus-based compound is at least one selected from the group consisting of: a phosphonate; an organic phosphite ester; an organic phosphinite; a metal salt of a phosphinic acid; a metal salt of a diphosphinic acid; a phosphinate; and a polyol phosphate alcohol.

<7> The polypropylene-based expanded particles described in any one of <4> through <6>, wherein the organic phosphorus-based compound is a cyclic phosphonate.

<8> The polypropylene-based expanded particles described in any one of <1> through <7>, wherein the polypropylene-based resin (b) has a weight average molecular weight of not less than $80 \times 10^4$.

<9> The polypropylene-based expanded particles described in any one of <1> through <8>, wherein the polypropylene-based resin (b) is a linear polypropylene-based resin.

<10> The polypropylene-based expanded particles described in any one of <1> through <9>, wherein the polypropylene-based expanded particles have a bulk density of 15.0 g/L to 400.0 g/L.

<11> The polypropylene-based expanded particles described in any one of <1> through <10>, wherein the polypropylene-based expanded particles have at least two melting peaks in a DSC curve obtained by measurement by differential scanning calorimetry and a high temperature-side melting heat quantity of 5.0 J/g to 25.0 J/g.

<12> The polypropylene-based expanded particles described in any one of <1> through <11>, wherein the polypropylene-based resin (a) and/or the polypropylene-based resin (b) are/is each an ethylene/propylene random copolymer.

<13> The polypropylene-based expanded particles described in any one of <1> through <12>, wherein the polypropylene-based expanded particles have an average cell diameter of 100 pm to 600 pm.

<14> The polypropylene-based expanded particles described in any one of < 1> through <13>, wherein an amount of the polypropylene-based resin (a) contained is 20% by weight to 95% by weight with respect to 100% by weight of the base resin.

<15> A polypropylene-based expanded molded product obtained by in-mold expansion molding of polypropylene-based expanded particles described in any one of <1> through < 14>.

<16> The polypropylene-based expanded molded product described in <15>, wherein the polypropylene-based expanded molded product has a bulk density of 15.0 g/L to 400.0 g/L.

<17> The polypropylene-based expanded molded product described in < 15> or <16>, wherein a standard V-2 is met in a UL94V test.

<18> The polypropylene-based expanded molded product described in any one of <15> through <17>, wherein a standard V- 1 is met in a UL94V test.

<19> The polypropylene-based expanded molded product described in any one of < 15> through <18>, in which a standard V-0 is met in a UL94V test.

<20> A method for producing polypropylene-based expanded particles, the method including: a dispersion step of dispersing polypropylene-based resin particles, an aqueous dispersion medium, and a blowing agent in a vessel; and a releasing step of releasing, into a region having a pressure lower than an internal pressure of the vessel, a dispersion slurry obtained in the dispersion step, the polypropylene-based resin particles containing a base resin containing a polypropylene-based resin (a) having an MI of 4.00 g/10.00 min to 15.00 g/10 min and a melting point of 135°C to 155°C and a polypropylene-based resin (b) having an MI of 0.05 g/ 10 min to 3.00 g/10 min and a melting point of 135°C to 155°C, and an intumescent-based flame retardant.

<21> The method described in <20>, wherein the polypropylene-based resin (a) and the polypropylene-based resin (b) are each a random polypropylene-based resin.

<22> The method described in <20> or <21>, wherein an amount of the polypropylene-based resin (b) contained is 5% by weight to 80% by weight with respect to 100% by weight of the base resin.

<23> The method described in any one of <20> through <22>, wherein an organic phosphorus-based compound and a hindered amine are contained as the intumescent-based flame retardant.

<24> The method described in <23>, wherein the polypropylene-based resin particles contain, with respect to 100% by weight of the polypropylene-based resin particles, the organic phosphorus-based compound in an amount of 3.0% by weight to 20.0% by weight and the hindered amine in an amount of 1.0% by weight to 10.0% by weight.

<25> The method described in <23> or <24>, wherein the organic phosphorus-based compound is at least one selected from the group consisting of: a phosphonate; an organic phosphite ester; an organic phosphinite; a metal salt of a phosphinic acid; a metal salt of a diphosphinic acid; a phosphinate; and a polyol phosphate alcohol.

<26> The method described in any one of <23> through <25>, wherein the organic phosphorus-based compound is a cyclic phosphonate.

<27> The method described in any one of <20> through <26>, wherein the polypropylene-based resin (b) has a weight average molecular weight of not less than $80\times10^4$.

<28> The method described in any one of <20> through <27>, wherein the polypropylene-based resin (b) is a linear polypropylene-based resin.

<29> The method described in any one of <20> through <28>, wherein the polypropylene-based resin (a) and/or the polypropylene-based resin (b) are/is each an ethylene/propylene random copolymer.

<30> The method described in any one of <20> through <29>, wherein an amount of the polypropylene-based resin (a) contained is 20% by weight to 95% by weight with respect to 100% by weight of the base resin.

<31> The method described in any one of <20> through <30>, wherein the blowing agent is water and/or carbon dioxide.

## Examples

The following description will discuss the present invention in detail through Examples. However, the technical scope of the present invention is not limited to these Examples.

[Materials]

The substances used in Examples and Comparative Examples are described below.

<Base resin>

(Polypropylene-based resin (a))

Polypropylene (a1): a linear ethylene/propylene random copolymer; MI of 7.00 g/ 10 min; melting point of 144°C; ethylene content of 3.2%; and Mw of $44 \times 10^4$

(Polypropylene-based resin (b))

Polypropylene (b1): a linear ethylene/propylene random copolymer; MI of 0.48 g/10 min; melting point of 142°C; ethylene content of 3.5%; and Mw of $121 \times 10^4$
Polypropylene (b2): a linear ethylene/propylene random copolymer; MI of 0.51 g/10 min; melting point of 149°C; ethylene content of 2.5%; and Mw of $116 \times 10^4$

<Intumescent-based flame retardant>

(Organic phosphorus-based compound)

AFLAMMIT (registered trademark) PCO900 (cyclic phosphonate) manufactured by Thor GmbH

(Hindered amine)

FLAMESTAB (registered trademark) NOR116 (compound of CAS No. 191680-81-6) manufactured by BASF

<Other additives>

(Nucleating agent)

Talcan Powder PK-S manufactured by Hayashi-Kasei Co., Ltd.

(Antioxidant)

Irgafos168 manufactured by BASF
Irganox1010 manufactured by BASF

(UV-ray inhibitor)

Tinuvin622 manufactured by BASF

<Blowing agent>

Carbon dioxide manufactured by Air Water Inc.

<Dispersion agent>

Kaolin ASP-170 manufactured by BASF
Tricalcium phosphate manufactured by Taihei Chemical Industrial Co., Ltd.

<Dispersion auxiliary agent>

DBS G-15 manufactured by Kao Corporation
The dispersion agent and the dispersion auxiliary agent are added to a dispersion slurry or to a pressure-resistant

closed vessel in the dispersion step described later. Therefore, the dispersion agent and the dispersion auxiliary agent do not remain or only remain in very small amounts in resin particles or expanded particles. Furthermore, carbon dioxide used as a blowing agent is emitted from the resulting expanded particles because the expanded particles have high gas permeability.

[Measurement method]

An evaluation method carried out in Examples and Comparative Examples will be described below.

(MI of polypropylene-based resin (polypropylene-based resin (a) and polypropylene-based resin (b)))

MI of the polypropylene-based resin was measured with use of an MI measurement device as specified in JIS K7210: 1999, under the following conditions: orifice diameter φ of 2.0959 mm±0.005 mm; orifice length of 8.000 mm ±0.025 mm; load of 2160 g; and temperature of 230°C±0.2°C.

(Measurement of average cell diameter of expanded particles)

The method for measuring the average cell diameter of the expanded particles was carried out as in the following processes (1) through (5): (1) an expanded particle was cut at the center thereof with use of a razor (a high stainless steel double-beveled blade manufactured by FEATHER Safety Razor Co., Ltd.); (2) then, a resulting cross section of the expanded particle was observed with use of an optical microscope (VHX-5000 manufactured by Keyence Corporation) at a magnification of 50 times; (3) in an image obtained by the observation, a straight line was drawn through the center or substantially center of the cross section of the expanded particle; (4) (4-1) the number (n) of cells present on the straight line was counted, and (4-2) a length of a line segment cut from the straight line at intersections of the straight line and the surface of the expanded particle was measured and regarded as a diameter L of the expanded particle; and (5) the average cell diameter of expanded particles was calculated by the following formula:

$$\text{Average cell diameter } (\mu m) = L/n.$$

(High temperature-side melting heat quantity of expanded particles)

A high temperature-side melting heat quantity of the expanded particles was measured by the following processes (1) through (5): (1) approximately 5 mg of the expanded particles was measured out; (2) a temperature of the expanded particles thus measured out was increased, in measurement by differential scanning calorimetry, from 10°C to 190°C at a temperature increase rate of 10°C/min, so that the expanded particles were melted; (3) in a DSC curve of the expanded particles obtained in the process (2), a baseline was created by connecting, with a straight line, a point representing a temperature before the start of melting and a point representing a temperature after the end of the melting; (4) a straight line which passes through a maximum point between a melting peak on the high-temperature side or a melting peak at the highest temperature and an adjacent melting peak was drawn perpendicularly to the X-axis; and (5) a quantity of heat (J/g) calculated from the high-temperature side region enclosed by the baseline, the straight line passing through the maximum point, and the DSC curve was regarded as the high temperature-side melting heat quantity of the expanded particles.

(Bulk density of expanded particles)

A method for measuring a bulk density of the expanded particles included the following processes (1) through (3): (1) the expanded particles were introduced into a vessel having a volume V ($cm^3$) until the expanded particles overflowed from the vessel; (2) the top particles (upper surface) of the vessel were leveled off, and a weight W (g) of the expanded particles in the vessel was measured; and (3) the bulk density of the expanded particles was calculated by the following formula: Bulk density (g/L) of expanded particles = weight W (g) of expanded particles/{volume V ($cm^3$) of vessel/1000}.

(Density of expanded molded product)

A density of the expanded molded product was measured as described in the following processes (1) through (3): (1) a length (mm) in the length direction, a length (mm) in the width direction, and a length (mm) in the thickness direction of the expanded molded product were measured, and a volume V (L) of the expanded molded product was calculated; (2) a weight W (g) of the expanded molded product was measured; and (3) the density of the expanded molded product was

calculated on the basis of the following formula:

$$\text{Density of expanded molded product (g/L)} = W/V.$$

(Surface properties of expanded molded product)

The expanded molded product obtained was checked by visual observation to evaluate surface properties of the expanded molded product on the basis of the following criteria.
Good (G): There are few inter-particle dimples (gaps between expanded particles), no noticeable unevenness on the surface, and no wrinkles or shrinkage on the entire expanded molded product.
Fair (F): There are some inter-particle dimples, some noticeable surface unevenness, some wrinkles, and/or some shrinkage on the entire expanded molded product.
Poor (P): There are clearly a large amount of inter-particle dimples, surface unevenness, wrinkles, and/or shrinkage on the entire expanded molded product.

(Flame retardancy and remaining weight ratio of expanded molded product)

The flame retardancy of the expanded molded product was measured and evaluated by the UL94V "vertical burning test" and on the basis of the remaining weight ratio.

(UL94V "vertical burning test")

The test method in UL94V "vertical burning test" included the following operations (1) through (5): (1) a test sample having specific dimensions (length of 125 mm±5 mm × width of 13 mm±0.5 mm) and a specific thickness (thickness (t) of the test sample = 13 mm, 8 mm, or 5 mm) was cut out from the expanded molded product; (2) the test sample thus cut out was fixed at the upper part thereof with use of a fixing clamp, the test sample was held vertically, and absorbent cotton was placed immediately below the test sample; (2) flame of a gas burner was brought into contact, for 10 seconds, with the bottom end of the test sample being held, so as to burn the test sample (first burning); (3) the burning time and the red-hot time of the test sample were measured, and if the burning of the test sample stopped within 30 seconds, the flame of the gas burner was brought into contact with the bottom end of the test sample again for 10 seconds to burn the test sample (second burning); (4) the burning time and the red-hot time of the test sample were measured again; and (5) the operations (1) through (4) were repeated five times in total using different test samples, and the flame retardancy was evaluated in accordance with the evaluation criteria below.

Evaluation criteria

[No-good (unacceptable)]: During the first burning or the second burning, the samples continued to burn for not less than 30 seconds or some samples burned to the position of the fixing clamp.
[V-2]: No samples continued to burn for not less than 30 seconds after the first contact burning,

the sum of the burning times after 10 times of contact burning of five samples was not more than 250 seconds,
no samples burned to the position of the fixing clamp,
after the second contact burning, there was no sample for which the sum of the burning time and the red-hot time was not less than 250 seconds, and
there was/were a sample(s) whose particles that fell during the burning caused the absorbent cotton placed below the test sample to combust.

[V-1]: No samples continued to burn for not less than 30 seconds after the first contact burning or the second contact burning,

the sum of the burning times after 10 times of contact burning of five samples was not more than 250 seconds,
no samples burned to the position of the fixing clamp,
after the second contact burning, there was no sample for which the sum of the burning time and the red-hot time was not less than 250 seconds, and
there was no sample whose particles that fell during any burning caused the absorbent cotton placed below the test sample to combust.

[V-0]: No samples continued to burn for not less than 10 seconds after the first contact burning or the second contact burning,

the sum of the burning times after the total of 10 times of contact burning of five samples was not more than 50 seconds,
no samples burned to the position of the fixing clamp,
after the second contact burning, there was no sample for which the sum of the burning time and the red-hot time was not less than 30 seconds, and
there was no sample whose particles that fell during any burning caused the absorbent cotton placed below the test sample to combust.

(Remaining weight ratio)

With respect to a test sample after the UL94V test (after the second burning), a weight of the test sample (weight after the burning) was measured, and a remaining weight ratio of the expanded molded product was calculated in accordance with the following expression:

Remaining weight ratio (%) of the expanded molded product = {weight of the test sample after the burning (after the UL94V test) / weight of the test sample before the burning (before the UL94V test) $\times$ 100.

[Example 1]

(Preparation of polypropylene-based resin particles)

Components were dry-blended such that, in 100% by weight of a blended product, (i) as the base resin, the polypropylene-based resin (a1) and the polypropylene-based resin (b1) accounted for 29.6% by weight and 50.0% by weight, respectively, (ii) as the intumescent-based flame retardant, the organic phosphorus-based compound and the hindered amine accounted for 15.0% by weight and 5.0% by weight, respectively, and (iii) as other additives, Talcan Powder PK-S, which is a nucleating agent, accounted for 0.1% by weight, Irgafos 168, which is an antioxidant, accounted for 0.133% by weight, Irganox1010 accounted for 0.067% by weight, and Tinuvin622, which is a UV-ray inhibitor, accounted for 0.1% by weight (where the total amount of these other additives was 0.4% by weight).

The blended product thus obtained was introduced into a twin-screw extruder "TEM26SX manufactured by Shibaura Machine Co., Ltd.", and the resultant product was melted and kneaded at a resin temperature of 200°C. The melted and kneaded polypropylene-based resin composition was extruded in strands through a die attached to the tip of the extruder and having a circular hole. The extruded polypropylene-based resin composition was cooled with water, and then cut with a cutter, so that resin particles were obtained (granulation step).

(Preparation of polypropylene-based expanded particles)

100 parts by weight of the resin particles thus obtained, 442 parts by weight of pure water, 1.1 parts by weight of tricalcium phosphate as a dispersing agent, 0.22 parts by weight of Kaolin ASP-170, and 0.027 parts by weight of DBS as a dispersion auxiliary agent were introduced into a pressure-resistant closed vessel. After that, 2.1 parts by weight of carbon dioxide as a blowing agent was introduced into the pressure-resistant closed vessel while the raw materials in the pressure-resistant closed vessel were being stirred, so that a dispersion slurry was prepared (dispersion step). Next, the temperature inside the pressure-resistant closed vessel was increased by heating to an expansion temperature of 150.2°C. Subsequently, carbon dioxide was additionally injected into the pressure-resistant closed vessel, and the pressure in the pressure-resistant closed vessel was raised to an expansion pressure of 1.1 MPa (gage pressure) (temperature-increasing and pressure-increasing step). Next, the inside of the pressure-resistant closed vessel was maintained at the expansion temperature and expansion pressure for 20 minutes (maintaining step), and then a valve provided at the lower part of the closed vessel was opened so that the dispersion slurry was released through an orifice having an opening diameter of 3.6 mm into an expansion cylinder under atmospheric pressure. Thus, expanded particles were obtained (releasing step). At this time, carbon dioxide was additionally injected into the pressure-resistant closed vessel so that the pressure inside the pressure-resistant closed vessel was not reduced from the expansion pressure during the release of the dispersion slurry, and the internal pressure of the pressure-resistant closed vessel was maintained at 1.1 MPa (gage pressure). The expanded particles thus obtained were dried at 60°C for 6 hours, and then the average cell diameter, the high temperature-side melting heat quantity, and the bulk density (expanded particles bulk density) were measured. The results are shown in Table 1. The expanded particles thus obtained contained the organic phosphorus-based compound in an amount of 15.0% by weight and the hindered amine in an amount of 5.0% by weight,

with respect to 100% by weight as a total amount of the expanded particles.

(Preparation of polypropylene-based expanded molded product)

The expanded particles obtained were introduced into a pressure-resistant closed vessel. Air was introduced into the pressure-resistant closed vessel, and the expanded particles in the pressure-resistant closed vessel were impregnated with pressurized air, so that an internal-expanded particle pressure (absolute pressure) of 0.25 MPa (absolute pressure) was imparted to the expanded particles. The expanded particles impregnated with air were heat-molded using a molding machine (polypropylene in-mold expansion molding machine manufactured by DAISEN Co., Ltd.) with steam at 0.32 MPa (gage pressure), so that an expanded molded product was obtained. The expanded molded product obtained was left at room temperature for 1 hour, then cured and dried at 75°C for 12 hours in a thermostatic chamber, and then left at room temperature for 4 hours again. After that, the density, surface properties, flame retardancy, and remaining weight ratio of the obtained expanded molded product were measured and evaluated by the above-described method. The results are shown in Table 1.

[Examples 2 to 12 and Comparative Examples 1 to 8)

Resin particles, expanded particles, and an expanded molded product were obtained by methods similar to those of Example 1, except that the amounts of the respective components and/or the expansion conditions were changed as indicated in Tables 1 to 4. Then, physical properties thereof were measured and evaluated. The results are shown in Tables 1 to 4.

Note that in Examples 9 and 10, the obtained expanded particles were subjected to second-step expansion in accordance with the following procedure, and the second-step expanded particles thus obtained were molded to obtain an expanded molded product.

(Preparation of polypropylene-based expanded particles (second-step expanded particles))

The expanded particles (first-step expanded particles) obtained were dried at 60°C for 6 hours and then introduced into a pressure-resistant closed vessel. Air was introduced into the pressure-resistant closed vessel, and the first-step expanded particles in the pressure-resistant closed vessel were impregnated with pressurized air, so that an internal-expanded particle pressure (absolute pressure) of 0.30 MPa (absolute pressure) was imparted to the first-step expanded particles. Approximately 20 L of the first-step expanded particles which had been impregnated with the air (i.e., to which the internal-expanded particle pressure had been imparted) were introduced into the expansion machine. Then, the first-step expanded particles in the expansion machine were heated with steam at 0.10 MPa (gage pressure) for 30 seconds to further expand the first-step expanded particles (second-step expansion), so that expanded particles (second-step expanded particles) were obtained. Table 3 shows a density of the obtained second-step expanded particles.

It should be noted that in all of Examples (Examples 1 to 12) and Comparative Examples (Comparative Examples 1 to 9), the expanded particles obtained had two melting peaks in the DSC curve obtained by differential scanning calorimetry (DSC method).

[Table 1]

(Table 1)

| | | | | Ex. 1 | Ex. 2 | Ex. 3 | Ex. 4 | Ex. 5 | Ex. 6 | Ex. 7 |
|---|---|---|---|---|---|---|---|---|---|---|
| Resin particles | Base resin | Polypropylene-based resin (a1) | % by weight | 29.6 | 31.6 | 54.6 | 39.6 | 54.6 | 39.6 | 69.6 |
| | | Polypropylene-based resin (b1) | % by weight | 50.0 | 50.0 | - | 40.0 | 25.0 | 40.0 | 10.0 |
| | | Polypropylene-based resin (b2) | % by weight | - | - | 25.0 | - | - | - | - |
| | Intumescent-based flame retardant | Organic phosphorus-based compound | % by weight | 15.0 | 13.0 | 15.0 | 15.0 | 15.0 | 15.0 | 15.0 |
| | | Hindered amine | % by weight | 5.0 | 5.0 | 5.0 | 5.0 | 5.0 | 5.0 | 5.0 |
| | Other additives | | % by weight | 0.4 | 0.4 | 0.4 | 0.4 | 0.4 | 0.4 | 0.4 |
| Expanded particles | Expansion conditions | Blowing agent | - | $CO_2$ | $CO_2$ | $CO_2$ | $CO_2$ | $CO_2$ | $CO_2$ | $CO_2$ |
| | | Expansion temperature | °C | 150.2 | 150.3 | 152.6 | 150.3 | 150.0 | 150.1 | 151.6 |
| | | Expansion pressure | MPa | 1.1 | 1.0 | 1.0 | 1.0 | 1.3 | 1.2 | 1.2 |
| | | Presence/absence of second-step expansion | - | - | - | - | - | - | - | - |
| | Physical properties | Average cell diameter | µm | 339 | 294 | 235 | 250 | 241 | 247 | 323 |
| | | High temperature-side melting heat quantity | J/g | 13.1 | 12.8 | 19.8 | 17.0 | 15.3 | 15.6 | 15.6 |
| | | Bulk density of expanded particles | g/L | 245 | 146 | 116 | 138 | 125 | 99 | 88 |
| Expanded molded product | Physical properties | Density of molded product | g/L | 273 | 199 | 167 | 132 | 126 | 99 | 97 |
| | | Surface properties of molded product | - | Good | Good | Good | Good | Good | Good | Good |
| | | UL94V | t = 13 mm | V-0 | V-0 | V-0 | V-0 | V-0 | V-0 | V-0 |
| | | | t = 8 mm | V-0 | V-0 | V-0 | V-0 | V-0 | V-0 | V-0 |
| | | | t=5mm | V-0 | V-2 | V-0 | V-0 | V-2 | V-0 | V-2 |
| | | Remaining weight ratio of expanded product (%) | t = 13 mm | 96 | 93 | 91 | 86 | 86 | 82 | 72 |
| | | | t=8mm | 93 | 83 | 78 | 73 | 73 | 68 | 67 |
| | | | t=5mm | 79 | 67 | 71 | 51 | 53 | 41 | 38 |

[Table 2]

(Table 2)

| | | | | C. Ex. 1 | C. Ex. 2 | C. Ex. 3 | C. Ex. 4 | C. Ex. 5 |
|---|---|---|---|---|---|---|---|---|
| Resin particles | Base resin | Polypropylene-based resin (a1) | % by weight | 79.6 | 79.6 | 79.6 | 79.6 | 79.6 |
| | | Polypropylene-based resin (b1) | % by weight | - | - | - | - | - |
| | | Polypropylene-based resin (b2) | % by weight | - | - | - | - | - |
| | Intumescent-based flame retardant | Organic phosphorus-based compound | % by weight | 15.0 | 15.0 | 15.0 | 15.0 | 15.0 |
| | | Hindered amine | % by weight | 5.0 | 5.0 | 5.0 | 5.0 | 5.0 |
| | Other additive(s) | | % by weight | 0.4 | 0.4 | 0.4 | 0.4 | 0.4 |
| Expanded particles | Expansion conditions | Blowing agent | - | $CO_2$ | $CO_2$ | $CO_2$ | $CO_2$ | $CO_2$ |
| | | Expansion temperature | °C | 150.6 | 151.6 | 151.4 | 151.7 | 152.3 |
| | | Expansion pressure | MPa | 1.0 | 0.8 | 0.9 | 1.0 | 0.9 |
| | | Presence/absence of second-step expansion | - | - | - | - | - | - |
| | Physical properties | Average cell diameter | μm | 317 | 500 | 426 | 328 | 313 |
| | | High temperature-side melting heat quantity | J/g | 17.7 | 15.6 | 13.5 | 16.0 | 12.7 |
| | | Bulk density of expanded particles | g/L | 156 | 135 | 112 | 93 | 91 |
| Expanded molded product | Physical properties | Density of molded product | g/L | 200 | 184 | 134 | 117 | 102 |
| | | Surface properties of molded product | - | Poor | Poor | Poor | Fair | Fair |
| | | UL94V | t = 13 mm | V-0 | V-0 | V-0 | V-2 | V-2 |
| | | | t=8mm | V-0 | V-0 | V-0 | V-2 | V-2 |
| | | | t= 5mm | NG | NG | NG | NG | NG |
| | | Remaining weight ratio of expanded product (%) | t = 13 mm | 89 | 91 | 84 | 71 | 75 |
| | | | t=8mm | 74 | 80 | 69 | 56 | 49 |
| | | | t= 5mm | 40 | 50 | 38 | 19 | 0 |

[Table 3]

(Table 3)

| | | | | Ex. 8 | Ex. 9 | Ex. 10 | C. Ex. 6 | C. Ex. 7 |
|---|---|---|---|---|---|---|---|---|
| Resin particles | Base resin | Polypropylene-based resin (a1) | % by weight | 31.6 | 31.6 | 29.6 | 81.6 | 79.6 |
| | | Polypropylene-based resin (b1) | % by weight | 50.0 | 50.0 | 50.0 | - | - |
| | | Polypropylene-based resin (b2) | % by weight | - | - | - | - | - |
| | Intumescent-based flame retardant | Organic phosphorus-based compound | % by weight | 13.0 | 13.0 | 15.0 | 13.0 | 15.0 |
| | | Hindered amine | % by weight | 5.0 | 5.0 | 5.0 | 5.0 | 5.0 |
| | Other additive(s) | | % by weight | 0.4 | 0.4 | 0.4 | 0.4 | 0.4 |
| Expanded particles | Expansion conditions | Blowing agent | - | CO2 | CO2 | CO2 | CO2 | CO2 |
| | | Expansion temperature | °C | 150.2 | 150.3 | 150.0 | 150.5 | 150.3 |
| | | Expansion pressure | MPa | 1.5 | 1.2 | 1.3 | 2.0 | 2.0 |
| | | Presence/absence of second-step expansion | - | - | Good | Good | - | - |
| | Physical properties | Average cell diameter | µm | 225 | 253 | 328 | 245 | 351 |
| | | High temperature-side melting heat quantity | J/g | 13.2 | 12.2 | 12.6 | 14.2 | 16.7 |
| | | Bulk density of expanded particles | g/L | 79 | 74 | 63 | 75 | 65 |
| Expanded molded product | Physical properties | Density of molded product | g/L | 80 | 80 | 62 | 78 | 67 |
| | | Surface properties of molded product | - | Good | Good | Good | Fair | Fair |
| | | UL94V | t = 13 mm | V-2 | V-2 | V-2 | NG | NG |
| | | Remaining weight ratio of expanded product (%) | t = 13 mm | 71 | 80 | 77 | 60 | 62 |

[Table 4]

(Table 4)

| | | | | | Ex. 11 | Ex. 12 | C. Ex. 8 | C. Ex. 9 |
|---|---|---|---|---|---|---|---|---|
| Resin particles | Base resin | Polypropylene-based resin (a1) | % by weight | 53.6 | 48.6 | 88.6 | 93.6 |
| | | Polypropylene-based resin (b1) | % by weight | 40.0 | 40.0 | - | - |
| | | Polypropylene-based resin (b2) | % by weight | - | - | - | - |
| | Intumescent-based flame retardant | Organic phosphorus-based compound | % by weight | 4.5 | 9.0 | 9.0 | 4.5 |
| | | Hindered amine | % by weight | 1.5 | 2.0 | 2.0 | 1.5 |
| | Other additive(s) | | % by weight | 0.4 | 0.4 | 0.4 | 0.4 |
| Expanded particles | Expansion conditions | Blowing agent | - | $CO_2$ | $CO_2$ | $CO_2$ | $CO_2$ |
| | | Expansion temperature | °C | 149.9 | 150.4 | 151.6 | 151.0 |
| | | Expansion pressure | MPa | 1.7 | 1.5 | 1.1 | 1.3 |
| | | Presence/absence of second-step expansion | - | - | - | - | - |
| | Physical properties | Average cell diameter | μm | 286 | 235 | 294 | 267 |
| | | High temperature-side melting heat quantity | J/g | 19.6 | 15.7 | 17.8 | 18.2 |
| | | Bulk density of expanded particles | g/L | 230 | 192 | 192 | 191 |
| Expanded molded product | Physical properties | Density of molded product | g/L | 237 | 184 | 200 | 240 |
| | | Surface properties of molded product | - | Good | Good | Poor | Poor |
| | | UL94V | t = 13 mm | V-0 | V-0 | V-2 | V-2 |
| | | Remaining weight ratio of expanded product (%) | t = 13 mm | 92 | 91 | 85 | 85 |

[Conclusion]

By comparing expanded molded products equivalent in density among Examples and Comparative Examples with reference to Tables 1 to 4, it is found that an expanded molded product obtained by in-mold expansion molding of the present expanded particles has excellent flame retardancy. Specifically, the following matters (1) to (4) are found.

(1) Comparison of the expanded molded products of Examples 1 and 2 and the expanded molded product of Comparative Example 1 shows the following. The expanded molded product of Comparative Example 1 was evaluated to be "no good" in a case where the test sample thereof had a thickness (t) of 5 mm, whereas the expanded molded product of Example 1, which had been obtained by in-mold expansion molding of the present expanded particles, met the standard V-0 even in a case where t was 5 mm, and the expanded molded product of Example 2, for which the organic phosphorus-based compound was added in a relatively small amount of 13% by weight, nevertheless met the standard V-2 even in a case where t was 5 mm. Further, both of the expanded molded products of Comparative Examples 1 and 2 had a high remaining weight ratio. Thus, it can be seen that the expanded molded products of Comparative Examples 1 and 2 have excellent flame retardancy.
(2) Comparison of the expanded molded product of Example 3 and the expanded molded product of Comparative Example 2 shows the following. The expanded molded product of Comparative Example 2 was evaluated to be "no good" in a case where the test sample thereof had a thickness (t) of 5 mm, whereas the expanded molded product of

Example 3, which had been obtained by in-mold expansion molding of the present expanded particles, met the standard V-0 even in a case where t was 5 mm, despite the fact that the expanded molded product of Example 3 had a relatively low density of 167 g/L. Further, the expanded molded product of Example 3 had a high remaining weight ratio. Thus, it can be seen that the expanded molded product of Example 3 has excellent flame retardancy.

(3) Comparison of the expanded molded products of Examples 4 and 5 and the expanded molded product of Comparative Example 3 shows the following. The expanded molded product of Comparative Example 3 was evaluated to be "no good" in a case where t was 5 mm, whereas each of the expanded molded products of Examples 4 and 5 obtained by in-mold expansion molding of the present expanded particles met the standard V-2 or a higher standard, even in a case where t was 5 mm. Further, the expanded molded products of Examples 4 and 5 each had a high remaining weight ratio. Thus, it can be seen that the expanded molded products of Examples 4 and 5 each have excellent flame retardancy.

(4) Comparison of the expanded molded products of Examples 6 and 7 and the expanded molded products of Comparative Examples 4 and 5 shows the following. The expanded molded products of Comparative Examples 4 and 5 were each evaluated to meet V-2 in a case where t was 13 mm or 8 mm and evaluated to be "no good" in a case where t was 5 mm. In contrast, each of the expanded molded products of Examples 6 and 7 obtained by in-mold expansion molding of the present expanded particles met the standard V-0 or a higher standard in a case where t was 13 mm or 8 mm. Further, the expanded molded products of Examples 6 and 7 each had a high remaining weight ratio. Thus, it can be seen that the expanded molded products of Examples 6 and 7 each have excellent flame retardancy.

(5) Comparison of the expanded molded products of Examples 8 to 10 and the expanded molded products of Comparative Examples 6 and 7 shows the following. The expanded molded products of Comparative Examples 6 and 7 were each evaluated to be "no good" due to having a low density, even in a case where t was 13 mm. In contrast, each of the expanded molded products of Examples 8 to 10, though having a relatively low density of not more than 80 g/L, met the standard V-2 in a case where t was 13 mm. This indicates that an expanded molded product obtained by in-mold expansion molding of the present expanded particles is capable of exhibiting flame retardancy even in a case where the expanded molded product has a relatively low density with which it is ordinarily difficult to impart flame retardancy to an expanded molded product.

(6) Comparison of the expanded molded products of Examples 11 and 12 and the expanded molded products of Comparative Examples 8 and 9 shows the following. The expanded molded products of Comparative Examples 8 and 9 were each evaluated to meet V-2 in a case where t was 13 mm, whereas the expanded molded products of Examples 11 and 12 each met the standard V-0 in a case where t was 13 mm. This indicates that an expanded molded product obtained by in-mold expansion molding of the present expanded particles is capable of exhibiting excellent flame retardancy even in a case where an amount of a flame retardant used is relatively small.

Industrial Applicability

Performing in-mold expansion molding of the polypropylene-based expanded particles in accordance with an embodiment of the present invention makes it possible to provide a polypropylene-based expanded molded product having excellent flame retardancy. The polypropylene-based expanded molded product having excellent flame retardancy can be put to various applications such as shock-absorbing packing materials, shipping materials, thermal insulating materials, civil engineering and construction materials, and automotive components, and, in particular, can be suitably used in various fields, such as those of transportation, architecture, structures, furniture, electric devices, and electronic devices, in which meeting the strict flame retardancy standards is required.

## Claims

**1.** Polypropylene-based expanded particles obtained by expanding polypropylene-based resin particles, the polypropylene-based resin particles containing:

a base resin containing a polypropylene-based resin (a) having an MI of 4.00 g/10 min to 15.00 g/10 min and a melting point of 135°C to 155°C and a polypropylene-based resin (b) having an MI of 0.05 g/10 min to 3.00 g/10 min and a melting point of 135°C to 155°C; and
an intumescent-based flame retardant.

**2.** The polypropylene-based expanded particles as set forth in claim 1, wherein the polypropylene-based resin (a) and the polypropylene-based resin (b) are each a random copolymer.

**3.** The polypropylene-based expanded particles as set forth in claim 1 or 2, wherein an amount of the polypropylene-based resin (b) contained is 5% by weight to 80% by weight with respect to 100% by weight of the base resin.

**4.** The polypropylene-based expanded particles as set forth in any one of claims 1 through 3, wherein an organic phosphorus-based compound and a hindered amine are contained as the intumescent-based flame retardant.

**5.** The polypropylene-based expanded particles as set forth in claim 4, wherein the polypropylene-based resin particles contain, with respect to 100% by weight of the polypropylene-based resin particles,

the organic phosphorus-based compound in an amount of 3.0% by weight to 20.0% by weight and
the hindered amine in an amount of 1.0% by weight to 10.0% by weight.

**6.** The polypropylene-based expanded particles as set forth in claim 4 or 5, wherein the organic phosphorus-based compound is a cyclic phosphonate.

**7.** The polypropylene-based expanded particles as set forth in any one of claims 1 through 6, wherein the polypropylene-based resin (b) has a weight average molecular weight of not less than $80 \times 10^4$.

**8.** The polypropylene-based expanded particles as set forth in any one of claims 1 through 7, wherein the polypropylene-based resin (b) is a linear polypropylene-based resin.

**9.** The polypropylene-based expanded particles as set forth in any one of claims 1 through 8, wherein the polypropylene-based expanded particles have a bulk density of 15 g/L to 400 g/ L.

**10.** The polypropylene-based expanded particles as set forth in any one of claims 1 through 9, wherein the polypropylene-based expanded particles have at least two melting peaks in a DSC curve obtained by measurement by differential scanning calorimetry and a high temperature-side melting heat quantity of 5.0 J/g to 25.0 J/g.

**11.** The polypropylene-based expanded particles as set forth in any one of claims 1 through 10, wherein the polypropylene-based resin (a) and/or the polypropylene-based resin (b) are/is each an ethylene/propylene random copolymer.

**12.** The polypropylene-based expanded particles as set forth in any one of claims 1 through 11, wherein the polypropylene-based expanded particles have an average cell diameter of 100 pm to 600 pm.

**13.** A polypropylene-based expanded molded product obtained by in-mold expansion molding of polypropylene-based expanded particles recited in any one of claims 1 through 12.

**14.** The polypropylene-based expanded molded product as set forth in claim 13, wherein the polypropylene-based expanded molded product has a bulk density of 15 g/L to 400 g/L.

**15.** A method for producing polypropylene-based expanded particles, the method comprising:

a dispersion step of dispersing polypropylene-based resin particles, an aqueous dispersion medium, and a blowing agent in a vessel; and
a releasing step of releasing, into a region having a pressure lower than an internal pressure of the vessel, a dispersion slurry obtained in the dispersion step,
the polypropylene-based resin particles containing

a base resin containing a polypropylene-based resin (a) having an MI of 4.00 g/10.00 min to 15.00 g/10 min and a melting point of 135°C to 155°C and a polypropylene-based resin (b) having an MI of 0.05 g/10 min to 3.00 g/10 min and a melting point of 135°C to 155°C, and
an intumescent-based flame retardant.

**INTERNATIONAL SEARCH REPORT**

International application No. **PCT/JP2023/008266**

**A. CLASSIFICATION OF SUBJECT MATTER**

***C08J 9/18***(2006.01)i
FI: C08J9/18 CES

According to International Patent Classification (IPC) or to both national classification and IPC

**B. FIELDS SEARCHED**

Minimum documentation searched (classification system followed by classification symbols)

C08J9/00-9/42; B29C44/00-44/60; C08K; C08L

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/052739 A1 (KANEKA BELGIUM N.V.) 07 April 2016 (2016-04-07) entire text | 1-15 |
| A | WO 2010/119670 A1 (KANEKA CORP.) 21 October 2010 (2010-10-21) entire text | 1-15 |
| A | JP 2018-53232 A (CHINA PETROLEUM & CHEMICAL CORP.) 05 April 2018 (2018-04-05) entire text | 1-15 |
| P, A | WO 2022/203035 A1 (KANEKA CORP.) 29 September 2022 (2022-09-29) entire text | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/008266**

| Patent document cited in search report | Publication date (day/month/year) | Patent family member(s) | Publication date (day/month/year) |
|---|---|---|---|
| WO 2016/052739 A1 | 07 April 2016 | US 2017/0204240 A1<br>EP 3002311 A1<br>CN 107148441 A | |
| WO 2010/119670 A1 | 21 October 2010 | US 2012/0037837 A1<br>EP 2420533 A1<br>CN 102388093 A | |
| JP 2018-53232 A | 05 April 2018 | US 2017/0313839 A1<br>EP 3241863 A1<br>CN 107325324 A<br>KR 10-2017-0123264 A | |
| WO 2022/203035 A1 | 29 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016052739 A
- FR 1503429
- US 4174343 A
- GB 1515223 A
- EP 0889085 A
- WO 2022149538 A

### Non-patent literature cited in the description

- *CHEMICAL ABSTRACTS*, 191680-81-6